**Europäisches Patentamt**

**European Patent Office**

**Office européen des brevets**

(19)

(11) Veröffentlichungsnummer: **0 120 256**

**A2**

(12) # EUROPÄISCHE PATENTANMELDUNG

(21) Anmeldenummer: **84101437.6**

(22) Anmeldetag: **13.02.84**

(51) Int. Cl.³: **H 01 F 1/11**
**H 01 F 1/06, H 01 F 1/20**
**H 01 F 1/36**

(30) Priorität: **25.02.83 DE 3306773**

(43) Veröffentlichungstag der Anmeldung:
**03.10.84 Patentblatt 84/40**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Biermann, Hans-Peter, Dr.**
**Bethelstrasse 52**
**D-4150 Krefeld 1(DE)**

(72) Erfinder: **Kiemle, Peter, Dr.**
**Bärenstrasse 53 a**
**D-4150 Krefeld 1(DE)**

(54) **Nicht staubende magnetische Pigmente, Verfahren zu ihrer Herstellung sowie deren Verwendung.**

(57) Die vorliegende Erfindung betrifft nicht zum Stauben neigende, in pulvriger oder körniger Form vorliegende Magnet-Pigmente für die magnetische Signalaufzeichnung sowie ein Verfahren zur Herstellung dieser Pigmente sowie die Verwendung der Pigmente zur Herstellung magnetischer Aufzeichnungsmedien.

EP 0 120 256 A2

0120256

BAYER AKTIENGESELLSCHAFT    5090 Leverkusen, Bayerwerk

Konzernverwaltung RP
Patentabteilung    St/m-c

Nicht staubende magnetische Pigmente, Verfahren zu ihrer
Herstellung sowie deren Verwendung

Gegenstand der vorliegenden Erfindung sind nicht zum
Stauben neigende, in pulvriger oder körniger Form vorliegende Pigmente für die magnetische Signalaufzeichnung
sowie ein Verfahren zur Herstellung dieser Pigmente.

Pulverförmige Materialien neigen häufig zum Stauben.
Auch in körniger Form vorliegende Feststoffe enthalten
oft einen gewissen Feinanteil, der sich bei der Produktion durch Abrieb während des Abfüllens oder beim
Transport gebildet hat. Die Nachteile der Staubentwicklung bei der Verarbeitung sind unter anderem Substanzverluste und eine Verunreinigung der Arbeitsplätze.

In der Vergangenheit wurden zahlreiche Vorschläge gemacht, wie das Stauben von Farbstoffen und Pigmenten
unterbunden werden kann. Dies kann einmal geschehen
durch die Behandlung des staubenden Materials mit kleinen Mengen verschiedenartiger Entstaubungsmittel

Le A 22 108

(DP-A 3 018 029), zum anderen durch die Behandlung des staubenden Materials mit größeren Mengen unterschiedlicher Bindemittel unter Ausbildung von Farbstoff/Pigment-Zubereitungen, -Zusammensetzungen, -Präparaten, -Massen, -Konzentraten, -Granulaten oder ähnlich bezeichneten Produkten (EP-A 0 008 083).

Alle diese Behandlungen führen zu Produkten, die neben dem Farbstoff oder Pigment weitere Hilfsmittel enthalten. Art und Menge dieser Hilfsmittel beeinflussen jedoch die Verarbeitbarkeit, und die Verwendung derartig entstaubter Materialien wird umso problematischer, je höher der Gehalt an Farbstoff oder Pigment im fertigen Erzeugnis sein soll.

Insbesondere bei der Herstellung pigmentierter magnetischer Aufzeichnungsträger, deren magnetisch wirksame Schicht üblicherweise 75 bis 85 Gew.-% magnetische Pigmente enthält, kann es daher zu Unverträglichkeiten mit den sorgfältig ausbalancierten Lackformulierungen kommen. Die Abstimmung der zur Entstaubung eingesetzten Hilfsmittel auf einzelne, von Anwender zu Anwender unterschiedliche Rezepturen aber ist für einen Magnetpigmentproduzenten mit hohen Aufwand verbunden.

Aufgabe der vorliegenden Erfindung ist es somit, nicht zum Stauben neigende Magnetpigmente zur Verfügung zu stellen, die die obengenannten Nachteile nicht aufweisen.

Überraschenderweise werden diese Anforderungenen erfüllt durch staubarme magnetische Pigmente, die aufmagnetisiert sind.

Le A 22 108

Gegenstand der vorliegenden Erfindung sind somit staubarme magnetische Pigmente, die aufmagnetisiert sind.

Aufmagnetisierte magnetische Pigmente verdanken ihre
Staubfreiheit ausschließlich magnetischen Kräften. Auf
die Behandlung mit entstaubend wirkenden Hilfsmitteln
kann völlig verzichtet werden, so daß sich eine Unverträglichkeit mit verschiedenen Anwenderrezepturen gar
nicht ergibt. Gleichzeitig bleiben die speichertechnischen
Eigenschaften voll erhalten, da ein Zusatz von Hilfsmitteln,
die magnetisch unwirksam sind, nicht stattfindet. Entgegen
der Erwartung unterscheiden sich die erfindungsgemäßen
magnetischen Pigmente in ihrer Dispergierbarkeit nicht
oder nur unwesentlich von ihren staubenden, nicht aufmagnetisierten Vorläufern. Die magnetischen Kräfte, die
die Teilchen im trockenen Zustand zusammenhalten, behindern beim Dispergiervorgang nicht die Zerteilung bis hin
zur Primärkornfeinheit. Problemlos wird mit ihnen eine
homogene Verteilung im Lack erreicht. Die erfindungsgemäßen Magnetpigmente sind dauerhaft staubfrei. Auch nach
mehreren Wochen ständiger Bewegung wird keine Neigung
zum Stauben festgestellt.

Das Verfahren zur Herstellung der erfindungsgemäßen
magnetischen Pigmente geschieht, indem magnetische
Pigmente in einem Magnetfeld aufmagnetisiert werden.

Dies kann in einfachster Form dadurch geschehen, daß man
einen Permanentmagneten mehrfach an der Wand eines mit

Le A 22 108

- 4 -

staubendem Magnetpigment gefüllten Behälters vorbeibewegt oder den Behälter anderweitig mit einem Permanentmagneten in Berührung bringt, dabei den Inhalt kurz bewegt und anschließend vom Permanentmagneten entfernt. Man kann den Behälter, in dem sich das staubende Magnetpigment befindet, aber auch zwischen die Polschuhe eines Elektromagneten bringen und diesen kurzzeitig zum Aufmagnetisieren des Pigmentes einschalten. Eine weitere Möglichkeit besteht darin, das staubende Pigment bei eingeschaltetem Elektromagneten zwangsweise kontinuierlich durch das Magnetfeld zwischen den Polschuhen zu fördern, beispielsweise mitteils eines geeigneten Bandförderers oder eines Schneckenförderers. Auf diese Weise lassen sich auch große Pigmentmengen innerhalb kurzer Zeit ohne besonderen technischen Aufwand entstauben.

Das Verfahren ist aufgrund seiner Einfachheit natürlich vielfältig variierbar. Wesentlich im Sinne der vorliegenden Erfindung ist jedoch, daß die Stärke des Magnetfeldes groß genug ist, um das staubende Magnetpigment so weit aufzumagnetisieren, daß ein den Anforderungen des Verarbeiters entsprechendes Staubverhalten erreicht wird. Die Stärke des Magnetfeldes für eine gute Entstaubung hängt im wesentlichen von drei Parametern ab: von der Koerzitivfeldstärke, vom Kornspektrum und von der Hydrophobie des eingesetzten Pigmentes. Je höher die Koerzitivfeldstärke, je feinteiliger das Material und je hydrophober die Oberfläche, desto stärker muß das angewandte Magnetfeld sein. Die notwendige Feldstärke kann ohne Schwierigkeiten im Einzelfall durch

Le A 22 108

wenige Versuche ermittelt werden. Im allgemeinen reichen Feldstärken zwischen $1,59 \times 10^4$ und $3,98 \times 10^5 \frac{A}{m}$. Die Verweilzeit des Materials im Magnetfeld kann sehr kurz sein, da die Spin-Relaxationszeiten im Mikrosekundenbereich liegen. Im allgemeinen sind Verweilzeiten zwischen einer Sekunde und einigen Minuten ausreichend.

Nach der Lehre der vorliegenden Erfindung können alle bekannten magnetischen Pigmente staubfrei gemacht werden, ohne daß dabei ein verfahrensbedingter Substanzverlust in Kauf genommen werden muß. Dies sind z.B. $\gamma$-Eisenoxide, Magnetite, Ferrite wie z.B. Bariumhexaferrit, Mischphasen von Ferriten wie z.B. Cobaltferrit mit $\gamma\text{-Fe}_2\text{O}_3$ oder mit $\text{Fe}_3\text{O}_4$, Mischphasen zwischen $\gamma\text{-Fe}_2\text{O}_3$ und $\text{Fe}_3\text{O}_4$ (Berthollide), Mischphasen von $\gamma\text{-Fe}_2\text{O}_3$ und $\text{Fe}_3\text{O}_4$ mit Ferriten wie z.B. Cobaltferrit und solche Magnetpigmente, die aus einem Kern aus $\gamma\text{-Fe}_2\text{O}_3$, $\text{Fe}_3\text{O}_4$, oder einem Eisenoxid mit einem Oxidationszustand zwischen $\gamma\text{-Fe}_2\text{O}_3$ und $\text{Fe}_3\text{O}_4$ und einer diesen Kern umgebenden Hülle aus magnetischen Metalloxiden - insbesondere des Eisens und des Cobalts - zusammengesetzt sind, außerdem Chromdioxide sowie magnetische Metall- und Legierungspulver. Die Herstellung dieser Magnetpigmente wird z.B. beschrieben von G. Bate in: Ferromagnetic Materials Hrsg. E.P. Wohlfarth, Vol. 2, S. 405 bis 491, North-Holland Publishing Co, Amsterdam 1980, und von L. Leitner und G. Buxbaum in: Ullmanns Encyklopädie der technischen Chemie, 4. Auflage, Bd. 18, S. 643 - 644, Verlag Chemie GmbH, Weinheim 1979. Es kann sich um isometrische oder

Le A 22 108

um anisometrische Teilchen handeln, unerheblich ist auch, ob die Pigmente anorganisch und/oder organisch nachbehandelt oder aber unbehandelt sind. Es bedarf ferner keinerlei Aufbereitung: die Pigmente können so wie sie im Produktionsprozeß anfallen dem anmeldungsgemäßen Verfahren unterzogen werden.

Die erfindungsgemäßen magnetischen Pigmente können zur Fertigung magnetischer Aufzeichnungsmedien jeglicher Art verwendet werden, wie Tonbänder, Videobänder, Instrumentationsbänder, Computerbänder, flexible und starre Magnetkarten, flexible Magnetscheiben, starre Magnetplatten, Trommelspeicher.

Derartige magnetische Informationsträger werden eingesetzt für Bild- und Tonaufzeichnung, zur Speicherung von Meßdaten, als externe Speicher für Datenverarbeitungsanlagen, zu Archivierungszwecken, für Textverarbeitungssysteme, für Identifikationssysteme wie Ausweise, Kreditkarten, Fahrkarten.

Die Erfindung wird nachfolgend durch Beispiele im einzelnen erläutert, die den Anmeldungsgegenstand jedoch in keiner Weise einschränken.

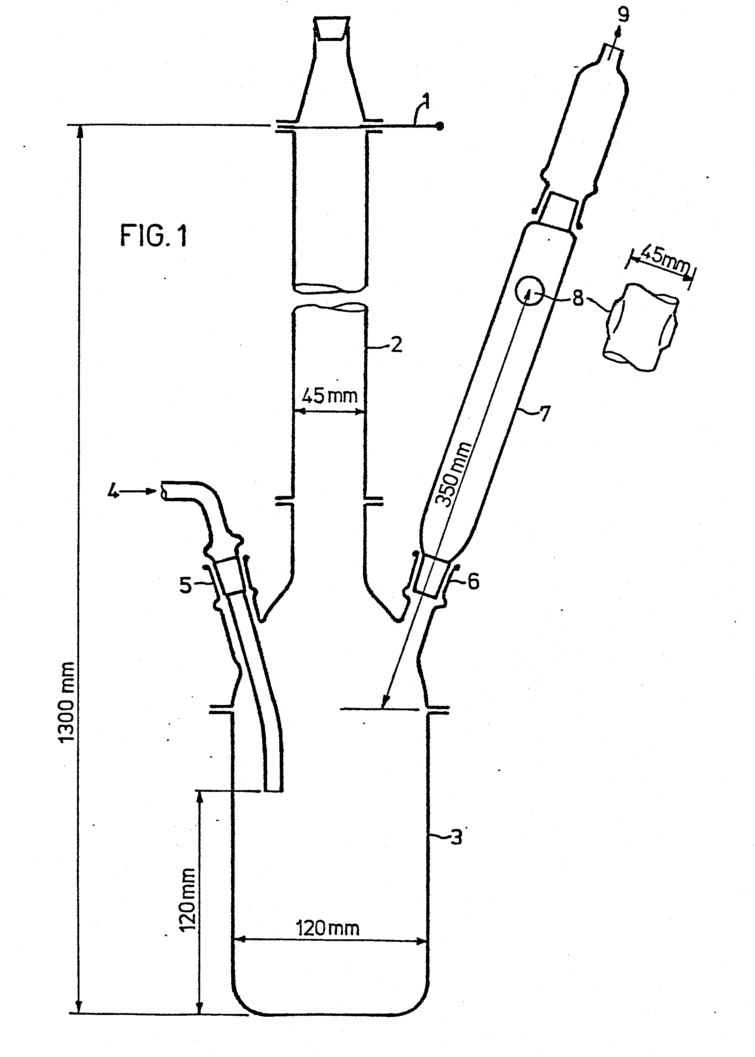

Die Staubmessungen erfolgten in der in Fig. 1 dargestellten Apparatur: Man läßt das zu prüfende Produkt über den Fallschacht (2) auf den Boden eines großvolumigen Gefäßes (3) prallen. Die dabei entstehende Staubwolke wird mittels eines Gasstromes im Rohr (7) an einer

Le A 22 108

Photozelle (8) vorbeigeführt. Mit Hilfe eines Kompensationsschreibers wird die Transmissionserniedrigung registriert und in bekannter Weise die Extinktion errechnet:

$$\text{Extinktion } E = 1 \lg \frac{Io}{Id}$$

Io = Transmission ohne Staub
Id = Transmission mit Staub

Es ist dabei darauf zu achten, daß der partikelbeladene Gasstrom vollständig die Meßstrecke passiert. Zur Auswertung des auf dem Schreiber erzeugten Meßpeaks wird das Peak-Maximum herangezogen.

Die Bestimmung der Dispergierbarkeit erfolgte zum einen durch Herstellung eines Testbandes und zum anderen durch Ermittlung der Dispergierhärte DH.

A. Herstellung des Testbandes

1 g des zu prüfenden magnetischen Pigmentes werden in 3 ml einer 20 gew.-%igen Lösung eines Polyvinylchlorid/Polyvinylacetat-Copolymerisates in Dimethylformamid, welche außerdem 8 Gew.-% Hilfsmittel (Dispergiermittel, Weichmacher etc.) enthält, auf einem Muller bei 5 kp Belastung mit 200 Umdrehungen dispergiert. Die so erhaltene Lackprobe wird mit einem 60-μm-Filmaufzieher auf eine 25 μm starke Polyesterfolie aufgezogen, in einem Magnetfeld ausgerichtet und anschließend getrocknet. An diesem

Le A 22 108

Testband wird bestimmt: Koerzitivfeldstärke IHc (bei $3,18 \times 10^5 \frac{A}{m}$ Meßfeldstärke), Rechteckverhältnis $B_R/B_S$ in Bandrichtung (Meßfeldstärke $7,96 \times 10^4 \frac{A}{m}$ bei Bändern mit IHc $< 6,37 \times 10^4 \frac{A}{m}$ bzw. $2,38 \times 10^5 \frac{A}{m}$ bei Bändern mit IHc $> 6,37 \times 10^4 \frac{A}{m}$) und Schaltfeldverteilung sfd. d.h., die Breite bei halber Höhe der differenzierten Hysteresekurve dM/dH (Feldänderungsgeschwindigkeit: $3,98 \times 10^2 \frac{A}{ms}$) im 2. und 3. Quadranten des Koordinatensystems, dividiert durch den Feldwert, bei dem die differenzierte Hysteresekurve ihr Maximum hat.

B.   Ermittlung der Dispergierhärte DH

10 g des zu prüfenden Pigmentes werden in 100 g einer 12 gew.-%igen Lösung eines Polyvinylchlorid/ Polyvinylacetat-Copolymerisats in gleichen Teilen Ethyl- und Butylacetat, welche außerdem 3 Gew.-% Hilfsmittel (Dispergiermittel, Weichmacher etc.) enthält, in einer Planetmühle (Mahlkörper: Glaskugeln mit 1 bis 3 mm Durchmesser) dispergiert. Nach 20 und nach 120 min Dispergierzeit wird jeweils 1 g Lackprobe entnommen, auf dem Muller in 5 g Weißpaste eingearbeitet und anschließend mit einem 200-µm-Filmaufzieher auf einen Pappkarton aufgezogen und getrocknet. Die Ermittlung der Dispergierhärte DH erfolgt nach DIN 53 238, Teil 22 und DIN 53 234.

Le A 22 108

Beispiel 1

a) Ein handelsübliches nachbehandeltes $\gamma$-Fe$_2$O$_3$-Pigment (Bayferrox® 8220 der Bayer AG) mit einer Koerzitivfeldstärke von 2,72 x 10$^4$ $\frac{A}{m}$ und folgender Korngrößenverteilung: 2 bis 0,5 mm: 27,6 Gew.-%, 0,5 bis 0,1 mm: 50,1 Gew.-%, 0,1 mm bis 35 µm: 21,4 Gew.-%, kleiner 35 µm: 0,9 Gew.-%, wurde wie oben beschrieben auf Staubverhalten und Dispergierbarkeit untersucht. Die Ergebnisse sind in Tabelle 1 zusammengefaßt.

b) 100 g des gleichen magnetischen Pigmentes wie in Beispiel 1 a) wurden in eine 250-ml-Glasflasche mit Polyethylenstopfen eingefüllt, die Flache auf einen Permanentmagneten aus Bariumferrit (Abmessungen L x B x H in mm: 75 x 50 x 20) mit einer Feldstärke von 4,77 x 10$^4$ $\frac{A}{m}$ , gemessen im Mittelpunkt der Grundfläche, bzw. 1,99 x 10$^4$ $\frac{A}{m}$, gemessen im Raum im lotrechten Abstand von 3 cm von diesem Punkt, gestellt und beides von Hand kurz geschüttelt. Das so behandelte Pigment wurde wie oben beschrieben auf Staubverhalten und Dispergierbarkeit untersucht. Die Ergebnisse sind in Tabelle 1 zusammengefaßt.

c) 100 g des gleichen Pigmentes wie in Beispiel 1 a) wurden in ein mit einem Polyethylenstopfen verschlossenes Glasrohr eingefüllt. Das gefüllte Glasrohr wurde 10 sek lang in das Magnetfeld eines Elektromagneten gehalten (Feldstärke ca. 3,18 x 10$^5$ $\frac{A}{m}$). Das so behandelte Pigment wurde wie oben

Le A 22 108

beschrieben auf Staubverhalten und Dispergierbarkeit untersucht. Die Ergebnisse sind in Tabelle 1 zusammengefaßt.

Beispiel 2

a) Ein handelsübliches, nicht nachbehandeltes Magnetitpigment (Bayferrox® Versuchsprodukt AC 5111 M der Bayer AG) mit einer Koerzitivfeldstärke von 3,34 x $10^4 \frac{A}{m}$ und folgender Korngrößenverteilung: 2 bis 0,5 mm: 15,8 Gew.-%, 0,5 bis 0,1 mm: 60,3 Gew.-%, 0,1 mm bis 35 µm: 17,0 Gew.-%, kleiner 35 µm: 6,9 Gew.-%, wurde wie oben beschrieben auf Staubverhalten und Dispergierbarkeit untersucht. Die Ergebnisse sind in Tabelle 1 zusammengefaßt.

b) 100 g des gleichen magnetischen Pigmentes wie in Beispiel 2 a) wurden in einen Polyethylenbeutel gefüllt, und derselbe Permanentmagnet wie in Beispiel 1 b) wurde mehrfach nahe um den gefüllten Beutel herumbewegt. Das so behandelte Pigment wurde wie oben beschrieben auf Staubverhalten und Dispergierbarkeit untersucht. Die Ergebnisse sind in Tabelle 1 zusammengefaßt.

c) 900 g des gleichen Pigmentes wie in Beispiel 2 a) wurden mit einer kleinen Förderschnecke durch das Feld eines Elektromagneten (Feldstärke ca. 3,18 . $10^4 \frac{A}{m}$ gefördert. Die mittlere Verweilzeit betrug dabei

Le A 22 108

1 min. Das in einer Vorlage aufgefangene Pigment wurde wie oben beschrieben auf Staubverhalten und Dispergierbarkeit untersucht. Die Ergebnisse sind in Tabelle 1 zusammengefaßt.

Beispiel 3

a) Ein nach dem in der DE-C 944 427 beschriebenen Verfahren hergestelltes isometrisches Cobalt-dotiertes $\gamma$-$Fe_2O_3$-Pigment mit einer Koerzitivfeldstärke von $6,95 \times 10^4 \frac{A}{m}$ und folgender Korngrößenverteilung: 2 bis 0,5 mm: 0,3 Gew.-%, 0,5 bis 0,1 mm: 2,2 Gew.-%, 0,1 mm bis 35 µm: 48,5 Gew.-%, kleiner 35 µm: 49,0 Gew.-%, wurde wie oben beschrieben auf Staubverhalten und Dispergierbarkeit untersucht. Die Ergebnisse sind in Tabelle 1 zusammengefaßt.

b) 100 g des gleichen Pigmentes wie in Beispiel 3 a) wurden wie in Beispiel 1 b) geschildert aufmagnetisiert. Das so behandelte Pigment wurde wie oben beschrieben auf Staubverhalten und Dispergierbarkeit untersucht. Die Ergebnisse sind in Tabelle 1 zusammengefaßt.

c) 100 g des gleichen Pigmentes wie in Beispiel 3 a) wurden wie in Beispiel 1 c) geschildert in einem Elektromagneten (Feldstärke ca. $3,58 \times 10^5 \frac{A}{m}$ ) 30 sek lang aufmagnetisiert. Das so behandelte Pigment wurde wie oben beschrieben auf Staubverhalten und Dispergierbarkeit untersucht. Die Ergebnisse sind in Tabelle 1 zusammengefaßt.

Le A 22 108

0120256

## Beispiel 4

a) Ein gemäß der EP-A 28 796 hergestelltes stark hydrophobes magnetisches Metallpigment mit einer Koerzitivfeldstärke von $9,7 \times 10^4 \frac{A}{m}$ und folgender Korngrößenverteilung: 2 bis 0,5 mm: 33,2 Gew.-%, 0,5 bis 0,1 mm: 9,3 Gew.-%, 0,1 mm bis 35 µm: 32,9 Gew.-%, kleiner 35 µm: 24,6 Gew.-%, wurde wie oben beschrieben auf Staubverhalten und Dispergierbarkeit untersucht. Die Ergebnisse sind in Tabelle 1 zusammengefaßt.

b) 100 g des gleichen Pigmentes wie in Beispiel 4 a) wurden in eine 250-ml-Glasflasche gefüllt. Derselbe Permanentmagnet, der auch in Beispiel 1 b) verwendet wurde, wurde an der Wand des Behältnisses mehrach um die Probe herumgeführt. Die so behandelte Probe wurde wie oben beschrieben auf Staubverhalten und Dispergierbarkeit untersucht. Die Ergebnisse sind in Tabelle 1 zusammengefaßt.

c) 100 g des gleichen Pigmentes wie in Beispiel 4 a wurden 3 min lang im ca. $3,18 \times 10^5 \frac{A}{m}$ starken Feld eines Elektromagneten aufmagnetisiert. Die so behandelte Probe wurde wie oben beschrieben auf Staubverhalten und Dispergierbarkeit untersucht. Die Ergebnisse sind in Tabelle 1 zusammengefaßt.

Le A 22 108

0120256

## Beispiel 5

a) 300 g des in Beispiel 2 c) aufmagnetisierten Pigmentes wurden in einer Glasflasche aufgehoben. Im Abstand von einigen Tagen wurden Proben entnommen und auf Staubverhalten untersucht. Die Ergebnisse sind in Tabelle 2 zusammengefaßt.

b) 500 g des in Beispiel 2 c) aufmagnetisierten Pigmentes wurden in ein mit Hubleisten versehenes, geschlossenes zylinderförmiges Behältnis eingefüllt und durch Drehen des Gefäßes um seine Längsachse (50 Upm) ständig umgeschaufelt. Im Abstand von einigen Tagen wurden Proben entnommen und auf Staubverhalten untersucht. Die Ergebnisse sind in Tabelle 2 zusammengefaßt.

Le A 22 108

Tabelle 1

| Bei-spiel | Staubtest ($I_o$ = 100) | | | Dispergiertest | | | Dispergierhärte |
| | eingesetzte Pigmentmenge in g | $I_d$ | E ($10^{-3}$) | Testband | | | |
| | | | | IHc in $\frac{A}{m} \times 10^4$ | $B_R/B_S$ | sfd | DH |
|---|---|---|---|---|---|---|---|
| 1 a) | 50 | 94,5 | 24,57 | 3,18 | 0,87 | 0,45 | 1,5 |
| 1 b) | 50 | 98,75 | 5,46 | 3,18 | 0,87 | 0,45 | 0,5 |
| 1 c) | 50 | 100 | 0 | 3,19 | 0,90 | 0,44 | 0,5 |
| 2 a) | 50 | 81,5 | 88,84 | 3,95 | 0,81 | 0,46 | 3,5 |
| 2 b) | 50 | 98,5 | 6,56 | 3,93 | 0,82 | 0,45 | 3 |
| 2 c) | 50 | 100 | 0 | 3,94 | 0,83 | 0,45 | 5 |
| 3 a) | 50 | 45,5 | 341,99 | 6,61 | 0,81 | 0,97 | 8 |
| 3 b) | 50 | 93,25 | 30,35 | 6,55 | 0,80 | 0,93 | 9 |
| 3 c) | 50 | 99,5 | 2,18 | 6,56 | 0,79 | 0,93 | 11 |
| 4 a) | 10 | 41,0 | 387,22 | 10,67 | 0,81 | 0,71 | 10 |
| 4 b) | 10 | 84,0 | 75,72 | 10,65 | 0,80 | 0,73 | 12 |
| 4 c) | 10 | 99,5 | 2,18 | 10,62 | 0,80 | 0,73 | 13 |

T a b e l l e  2

| Beispiel | Probennahme nach x Tagen | Staubtest ($I_o$ = 100) | | |
|---|---|---|---|---|
| | | eingesetzte Pigmentmenge in g | $I_d$ | E $(10^{-3})$ |
| 5 a) | sofort | 50 | 100 | 0 |
| | 1 | 50 | 100 | 0 |
| | 7 | 50 | 100 | 0 |
| | 14 | 50 | 99 | 4,36 |
| | 21 | 50 | 99,5 | 2,18 |
| 5 b) | sofort | 50 | 100 | 0 |
| | 1 | 50 | 100 | 0 |
| | 7 | 50 | 99,5 | 2,18 |
| | 14 | 50 | 100 | 0 |
| | 21 | 50 | 99 | 4,36 |
| | 28 | 50 | 100 | 0 |

Patentansprüche:

1. Staubarme magnetische Pigmente, dadurch gekennzeichnet, daß sie aufmagnetisiert sind.

2. Verfahren zur Herstellung der Pigmente gemäß Anspruch 1, dadurch gekennzeichnet, daß magnetische Pigmente in einem Magnetfeld aufmagnetisiert werden.

3. Verfahren gemäß Anspruch 2, dadurch gekennzeichnet, daß die Feldstärke des Magnetfeldes mindestens $1,59 \times 10^4 \frac{A}{m}$ beträgt.

4. Verfahren gemäß den Ansprüchen 2 und 3, dadurch gekennzeichnet, daß magnetische Pigmente im Feld eines Permanentmagneten aufmagnetisiert werden.

5. Verfahren gemäß den Ansprüchen 2 und 3, dadurch gekennzeichnet, daß magnetische Pigmente im Feld eines Elektromagneten aufmagnetisiert werden.

6. Verfahren gemäß einem der Ansprüche 2 bis 5, dadurch gekennzeichnet, daß magnetische Pigmente kontinuierlich durch ein Magnetfeld gefördert werden.

7. Verwendung der Pigmente gemäß Anspruch 1 zur Herstellung magnetischer Aufzeichnungsmedien.

Le A 22 108

FIG.1